# EUROPÄISCHE PATENTSCHRIFT

(11) **EP 1 721 380 B1**
(45) Veröffentlichungstag und Bekanntmachung des Hinweises auf die Patenterteilung: **29.10.2008**
(21) Anmeldenummer: 05715054.2
(22) Anmeldetag: 03.03.2005
(51) Int. Cl.: H02K 41/035, H02K 9/22, H02K 5/00, G05G 5/04, G05G 1/14

(54) **STELLANTRIEB MIT LINEARAKTOR**
ACTUATING DRIVE COMPRISING A LINEAR ACTUATOR
MECANISME DE COMMANDE COMPORTANT UN ACTIONNEUR LINEAIRE

(30) Priorität: 04.03.2004 DE 102004011209
(43) Veröffentlichungstag der Anmeldung: 15.11.2006
(73) Patentinhaber: Conti Temic microelectronic GmbH, 90411 Nürnberg (DE)
(72) Erfinder: GEBHART, Bernd, 90556 Sendendorf (DE); PIRNER, Hermann, 82278 Illschwang (DE); WEBER, Robert, 91301 Forchheim (DE); OED, Harald, 90482 Nürnberg (DE); LAUFER, Herbert, 91322 Gräfenberg (DE); HABEL, Peter, 90408 Nürnberg (DE); WIESER, Hermann, 90455 Nünberg (DE); NAGEL, Michael, 90455 Nürnberg (DE); GRAMANN, Matthias, 91233 Neunkirchen a.S. (DE)
(86) Internationale Anmeldenummer: PCT/DE2005/000371
(87) Internationale Veröffentlichungsnummer: WO 2005/086329

(56) Entgegenhaltungen:
- DE-A1- 10 161 366
- US-A- 4 453 517
- US-A1- 2003 149 521
- US-B1- 6 300 691
- PATENT ABSTRACTS OF JAPAN Bd. 2003, Nr. 05, 12. Mai 2003 (2003-05-12) -& JP 2003 032995 A (SANYO DENKI CO LTD), 31. Januar 2003 (2003-01-31)
- PATENT ABSTRACTS OF JAPAN Bd. 009, Nr. 268 (M-424), 25. Oktober 1985 (1985-10-25) & JP 60 113736 A (HONDA GIKEN KOGYO KK), 20. Juni 1985 (1985-06-20)

## Beschreibung

Die Erfindung betrifft einen Stellantrieb nach dem Oberbegriff des Anspruchs 1.

Ein Stellantrieb der gattungsgemäßen Art ist aus der DE 101 01 609 A1 bekannt. Der Stellantrieb weist ein Gehäuse mit einem Steckerschacht auf und nimmt zumindest einen Elektromotor, ein Untersetzungsgetriebe und eine Leiterplatte auf. Die Versorgung des Elektromotors erfolgt über die Leiterplatte. In der Leiterplatte sind Kontaktstifte eingepresst. Die von den Kontaktstiften zum Elektromotor führenden elektrischen Verbindungen werden vor der Montage außerhalb des Gehäuses an die Kontaktstifte gelötet. Danach wird die Leiterplatte in das Gehäuse eingesetzt und fixiert. Von außen werden Flachkontakte durch Durchgänge im Steckerschacht des Gehäuses auf die Kontaktstifte gerastet und stellen somit die elektrische Verbindung zwischen Versorgung und Elektromotor her.

Nachteilig bei diesem Stellantrieb ist, dass er ohne Umlenkmechanismen nur rotatorische Bewegungen ausführen kann und dass zur Kraftübertragung ein Untersetzungsgetriebe benötigt wird. Dies erhöht sowohl die Herstellungs- und Montagekosten, als auch das Gewicht des Stellantriebs. Außerdem ist die Herstellung der elektrischen Verbindungen der einzelnen Komponenten untereinander aufwändig. Zum Beispiel müssen die elektrischen Verbindungen zum Elektromotor an die Kontaktstifte der Leiterplatte gelötet werden.

Die Offenlegungsschrift JP 2003032995 A offenbart einen Stellantrieb mit einem zylinderförmigen linearen Synchronmotor, welcher mittels eines linearen Funktionsgebers die Position einer Nadel bestimmt. Nachteilig bei diesem Stellantrieb ist, dass keine Einrichtung vorgesehen ist, die die vom Synchronmotor erzeugte Wärme abführt.

Es ist daher die Aufgabe der vorliegenden Erfindung, einen einfach zu montierenden, wenige Bauteile umfassenden und kompakten Stellantrieb derart zu schaffen, dass sowohl Material- und Herstellungskosten, als auch der benötigte Bauraum gering sind und dass ferner die im Stellantrieb entstehende Wärme effizient abgeführt wird.

Diese Aufgabe wird erfindungsgemäß gelöst durch die Merkmale des Anspruchs 1. Vorteilhafte Weiterbildungen sind Gegenstand der auf den Anspruch 1 unmittelbar oder mittelbar rückbezogenen Ansprüche.

Die erfindungsgemäße Stellantrieb umfasst im wesentlichen ein Gehäuse mit wenigstens einer Kontaktiervorrichtung, eine Leiterplatte zur Aufnahme von elektrischen Bauteilen und wenigstens ein Kontaktelement und einen Elektromechanischen Aktor mit einem beweglichen Stellglied. Der Aktor ist erfindungsgemäß als Linearaktor ausgebildet. Dadurch können ohne Verwendung eines Umlenkmechanismusses oder eines Getriebes lineare Kraftübertragungen mit hoher Präzision erreicht werden.

Um eine möglichst reibungs- und geräuscharme Bewegung des Stellgliedes zu gewährleisten, sind an dem Stellantrieb an verschiedenen Stellen Lagervorrichtungen vorgesehen. Vorteilhafterweise ist mindestens eine Lagervorrichtung am nicht beweglichen Teil der Rückstellvorrichtung vorgesehen. Vorzugsweise kann auch das Gehäuse wenigstens einen Teil der Lagervorrichtung des beweglichen Stellgliedes aufnehmen. Es kann aber auch die gesamte Lagervorrichtung am Gehäuse integriert sein.

Die Herstellung des Gehäuses und der Kontaktiervorrichtung geschieht insbesondere in einem Arbeitsgang. Dabei wird wenigstens ein Steckerkragen an das Gehäuse angespritzt. Im selben Arbeitsgang werden Kontaktstifte in die Kontaktiervorrichtung des Gehäuses eingespritzt. Über die Kontaktiervorrichtung am Gehäuse werden die elektrische Verbindung zwischen Versorgungseinrichtung und Leiterplatte bzw. Aktor hergestellt und die ein- und ausgehenden Signale übertragen.

Um den Aktor mit der Kontaktiervorrichtung am Gehäuse elektrisch zu verbinden, werden die Enden der Kontaktstifte, die in das Innere des Gehäuses ragen, vorzugsweise in entsprechende Aufnahmen am Aktor eingepresst.

Um die elektrische Verbindung der Kontaktiervorrichtung des Gehäuses zu dem wenigstens einen Kontaktelement der Leiter-platte herzustellen, werden vorteilhafterweise auch die entsprechenden Enden der Kontaktstifte der Kontaktiervorrichtung, die in das Innere des Gehäuses ragen, in die entsprechenden Aufnahmen des wenigstens einen Kontaktelements der Leiterplatte eingepresst.

Um die elektrische Verbindung des wenigstens einen Kontaktelements der Leiterplatte zum Aktor herzustellen, werden insbesondere die entsprechenden Enden der Kontaktstifte am Aktor in die entsprechenden Aufnahmen des wenigstens einen Kontaktelements der Leiterplatte eingepresst.

Der nicht bewegliche Teil des Aktors ist vorzugsweise mit einem Kühl-/Halteblech verbunden ist. Dieses Kühl-/Halteblech kann bespielsweise an einem Pedalhalter eines Gaspedals in einem Kraftfahrzeug befestigt sein. Dadurch kann unter anderem die im Aktor entstehende Wärme über den Pedalhalter an die Karosserie des Kraftfahrzeugs abgegeben werden.

Vorzugsweise umfasst das Gehäuse eine Gehäuseschale und einen Gehäusedeckel. Die Gehäuseschale kann beispielsweise zur Aufnahme und zur Fixierung der einzelnen Komponenten des Stellantriebs dienen. Der Gehäusedeckel kann ebenfalls zumindest einen Teil der Komponenten des Stellantriebs fixieren

Nachfolgend wird die Erfindung an Hand eines bevorzugten Ausführungsbeispiels in Verbindung mit den Zeichnungen weiter erläutert. Es zeigen
- Fig. 1: einen Querschnitt des Stellantriebs und
- Fig. 2: eine dreidimensionale Explosionszeichnung des Stellantriebs nach Fig. 1.

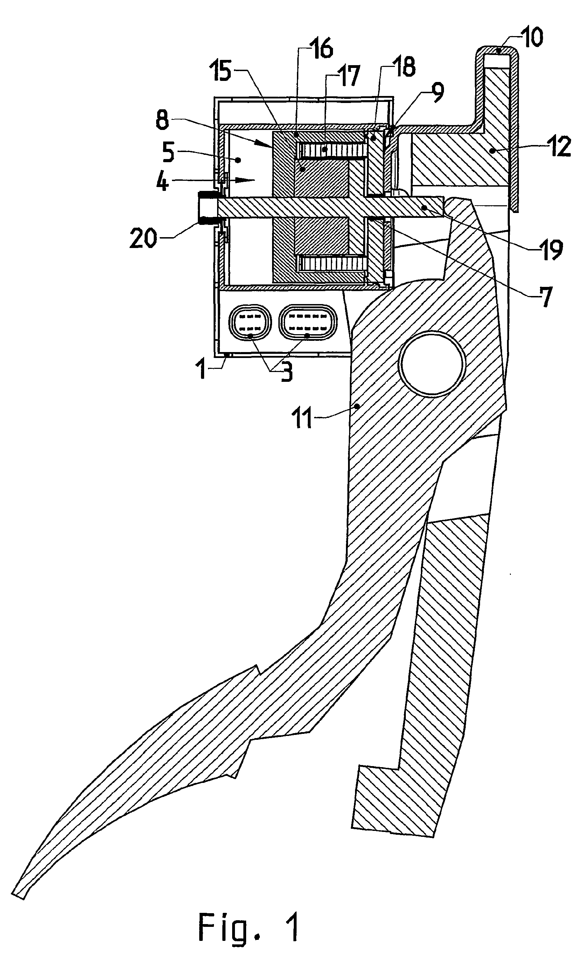

Der in Fig. 1 dargestellte Stellantrieb umfasst ein Gehäuse 1, 2 mit wenigstens einer Kontaktiervorrichtung 3, eine Leiterplatte 5 zur Aufnahme von elektrischen Bauteilen und wenigstens einem Kontaktelement 6, 13 und einem elektromechanischen Aktor 4 mit einem beweglichen Stellglied 8, 9. Das bewegliche Stellglied 8, 9 des Aktors 4 wirkt auf ein Pedalelement 11, beispielsweise ein Gaspedal in einem Kraftfahrzeug.

Das Pedalelement 11 kann drehbar an einem Pedalhalter 12 angeordnet sein. Der Pedalhalter 12 wiederum kann in nicht gezeigter Weise insbesondere mit einer Fahrzeugkarosserie verbunden sein. Zum Beispiel kann der Stellantrieb ein Teil eines Geschwindigkeitsbegrenzungssystems sein. Sobald en Geschwindigkeitsgrenzwert überschritten wird, bewirkt das Stellglied 8, 9 eine Gegenkraft auf das Pedalelement 11 in die Richtung, die der Richtung, in der Fahrzeuglenker mit seinem Fuß zum Zweck einer Geschwindigkeitserhöhung auf das Pedalelement 11 einwirkt, entgegengesetzt ist. Dadurch kann der Wunsch des Fahrzeuglenkers nach einer Geschwindigkeitserhöhung vorzugsweise unterbunden werden.

Der elektromechanische Aktor 4 ist erfindungsgemäß als Linearaktor ausgeführt.Der Linearaktor funktioniert beispielsweise nach dem Tauchspulenprinzip. Ein Vorteil des Tauchspulenprinzips ist, dass die Kraft über den gesamten Stellweg nahezu konstant ist. Des weiteren sind mithilfe dieses Prinzips sehr kleine, hoch aufgelöste Auslenkungen in kürzester Zeit möglich. Durch Stromumkehr im Erregerkreis oder in der Spulenanordnung sind zwei aktive Wirkrichtungen möglich.

Der Aktor 4 ist vorzugsweise zylinderförmig mit kreisförmigem Querschnitt ausgebildet. Er umfasst eine Magnetanordnung 8 und eine Spulenanordnung 9. Die Magnetanordnung 8 umfasst im wesentlichen einen ringförmigen Magneten 15, hier einen Permanentmagneten, und ein im wesentlichen topfförmiges Magnetjoch 16, das den Magneten 15 umgibt. Die Spulenanordnung 9 umfasst eine Spule 17 und einen im wesentlichen topfförmigen Spulenträger 18.

Die Magnetanordnung 8 ist als bewegliches Stellglied vorgesehen. In der Achse des topfförmigen Magnetjochs 16 ist bevorzugt ein im wesentlichen stabförmiger Betätigungsstößel 19 derart integriert, dass er über die Ober- und die Unterseite des topfförmigen Magnetjochs 16 hinausragt. Der Betätigungsstößel 19 wirkt insbesondere auf das Pedalelement 11.

Der Spulenträger 18 istbeispielsweise mit dem Gehäuse 1, 2 verbunden und bildet den fest stehenden Teil des Stellantriebs. Die Spule 17 ist auf die äußere Mantelfläche des Spulenträgers 18 gewickelt. Der Spulenträger 18 weist in seiner Achse eine insbesondere kreisförmige Öffnung auf, durch die hindurch der pedalseitige Teil des Betätigungsstößels 19 auf das Pedalelement 11 wirkt.

Das topfförmige Magnetjoch 16 und der topfförmige Spulenträger 18 sind beispielsweise konzentrisch so angeordnet, dass die innere Mantelfläche des Magnetjochs 16 die äußere Mantelfläche des Spulenträgers 18 mit der Spule 17 zumindest teilweise umschließt und die innere Mantelfläche des Spulenträgers 18 wiederum die äußere Mantelfläche des ringförmigen Magneten 15 zumindest teilweise umschließt.

Wird die Spule 17 bestromt, so bewegt sich je nach Stromrichtung die Magnetanordnung 8 mit dem Betätigungsstößel 19 in der Achse des Aktors 4 vom Pedalelement 11 weg oder zum Pedalelement 11 hin. Dabei bewegt sich der zum Pedalelement 11 gewandte Teil des Betätigungsstößels 19 während des gesamten Stellweges in der insbesondere kreisförmigen Öffnung des Spulenträgers 18.

Die Bewegung der Magnetanordnung 8 verläuft vorzugsweise geradlinig. Sie könnte aber auch auf einer leicht gekrümmten Bahn, zum Beispiel auf einem Kreissegment erfolgen.

Alternativ zu dem in der Fig. 1 gezeigten Ausführungsbeispiel ist es auch denkbar, den Betätigungsstößel 19 am Spulenträger 18 zu integrieren und die Spulenanordnung 9 als bewegliches Stellglied auszuführen.

Zwischen dem Betätigungsstößel 19 und dem Pedalelement 11 gibt es keinerlei mechanische oder anders geartete feste Verbindung. Dadurch ist sichergestellt, dass der Betätigungsstößel 19 auf das Pedalelement 11 nur in eine Richtung eine Kraft ausüben kann, und zwar in Richtung einer Geschwindigkeitsverringerung

Um den Verschleiß und die Geräuschentwicklung des Stellantriebes minimal zu halten, ist eine Lagervorrichtung 7, 20 für das bewegliche Stellglied auf beiden Seiten des Betätigungsstößels 19 vorgesehen. Nach einer bevorzugten Ausführungsform ist auf der dem Pedalelement 11 zugewandten Seite die Lagervorrichtung 7 in der vorzugsweise kreisrunden Öffnung axial im Boden des topfförmigen Spulenträgers 18 angebracht.

Die Lagervorrichtung 20 für den Betätigungsstößel 19 auf der dem Pedalelement 11 abgewandten Seite ist vorzugsweise am Gehäuse 1, 2 des Stellantriebes vorgesehen. Dieses Lager kann zusätzlich eine Abdichtfunktion erfüllen. Als Lagervorrichtung 7, 20 kann beispielsweise ein Gleitlager oder eine Teflonbuchse verwendet werden.

Denkbar wäre auch, dass die Lagervorrichtung 20 ebenfalls im Spulenträger 18 integriert ist. Beispielweise kann der axial verlaufende Teil des Spulenträgers 18 als Hohlzylinder ausgebildet sein. Die Lagervorrichtung- 20 wäre dann zum Beispiel an dem vom Pedalelement 11 abgewandten Ende des Hohlzylinders vorgesehen.

Insbesondere kann die Lagervorrichtung 7 auf der dem Pedalelement 11 zugewandten Seite statt im Spulenträger 18 am Gehäuse 1, 2 integriert sein und zusätzlich an dieser Stelle des Gehäuses 1, 2 eine Dichtfunktion übernehmen.

Bei der Herstellung des Gehäuses 1 werden vorzugsweise mindestens ein Steckerkragen an das Gehäuse 1 angespritzt und Kontaktstifte in die Kontaktiervorrichtung 3 des Gehäuses 1 eingespritzt.

Die elektrische Verbindung der Kontaktiervorrichtung 3 des Gehäuses 1 zu dem wenigstens einen Kontaktelement 6 der Leiterplatte 5 ist insbesondere als Einpressverbindung ausgeführt. Um diese Einpressverbindung herzustellen, werden vorteilhafterweise die entsprechenden Enden der Kontaktstifte der Kontaktiervorrichtung 3, die in das Innere des Gehäuses 1 ragen, in entsprechende Aufnahmen des wenigstens einen Kontaktelements 6 der Leiterplatte 5 eingepresst. Insbesondere wird dadurch die Verbindung zwischen einer sich außerhalb des Gehäuses 1, 2 befindlichen Versorgung zur Leiterplatte 5 hergestellt und zur Leiterplatte 5 eingehende und von der Leiterplatte 5 ausgehende Signale übertragen.

Die elektrische Verbindung zwischen dem wenigstens einen Kontaktelement 13 der Leiterplatte 5 und dem Aktor 4 ist vorzugsweise ebenfalls als Einpressverbindung ausgeführt. Um diese Einpressverbindung herzustellen, werden insbesondere die entsprechenden Enden der in nicht gezeigter Weise am Aktor 4 angeordneten Kontaktstifte in entsprechende Aufnahmen des wenigstens einen Kontaktelements 3 der Leiterplatte 5 eingepresst.

Vorzugsweise sind die Kontaktstifte am Aktor 4 an der Spule 17 vorgesehen. Durch diese Verbindung kann insbesondere ein in nicht gezeigter Weise auf der Leiterplatte befindliches Steuergerät Signale an den Aktor 4 übertragen, die den Stellweg des Betätigungsstößels 19 steuern.

Es wäre auch denkbar, den Aktor 4 über eine Einpressverbindung direkt mit der Kontaktiervorrichtung 3 am Gehäuse 1 elektrisch zu verbinden. Dadurch wäre zum Beispiel die Möglichkeit gegeben, Signale von einer sich außerhalb des Stellantriebs befindlichen Steuereinheit an den Aktor 4 zu übermitteln. Oder umgekehrt könnten Signale vom dem Aktor 4, zum Beispiel von einem nicht gezeigten Positionsgeber, der die Lage des beweglichen Stellgliedes 8, 9 misst, an die Steuereinheit außerhalb des Stellantriebs geleitet werden.

Der nicht bewegliche Teil des Aktors 4, in diesem Fall die Spulenanordnung 9, ist vorzugsweise über den Spulenträger 18 mit einem Kühl-/Halteblech 10 verbunden. Die Verbindung kann zum Beispiel durch Schrauben, Nieten oder auch Kleben hergestellt werden. Das Kühl-/Halteblech 10 ist insbesondere an einem Pedal-halter 12 eines Gaspedals in einem Kraftfahrzeug befestigt sein, ebenfalls beispielsweise durch Schrauben, Nieten oder auch Kleben. Dadurch kann unter anderem die im Aktor 4 entstehende Wärme über den Pedalhalter 12 an die Karosserie des Kraftfahrzeugs abgegeben werden.

Vorzugsweise umfasst das Gehäuse 1, 2 eine Gehäuseschale 1 und einen Gehäusedeckel 2. Die Gehäuseschale 1 kann beispielsweise zur Aufnahme und zur Fixierung der einzelnen Komponenten des Stellantriebs dienen. Der Gehäusedeckel 2 kann ebenfalls zumindest einen Teil der Komponenten des Stellantriebs fixieren.

Die Verbindung der Gehäuseschale 1 mit dem Gehäusedeckel 2 ist insbesondere als Rastverbindung ausgeführt. Dabei rasten vorzugsweise die Vorsprünge der Rastvorrichtung 14 an der Gehäuseschale 1 in die Ausnahmen der Rastvorrichtung 14 am Gehäusedeckel 2.

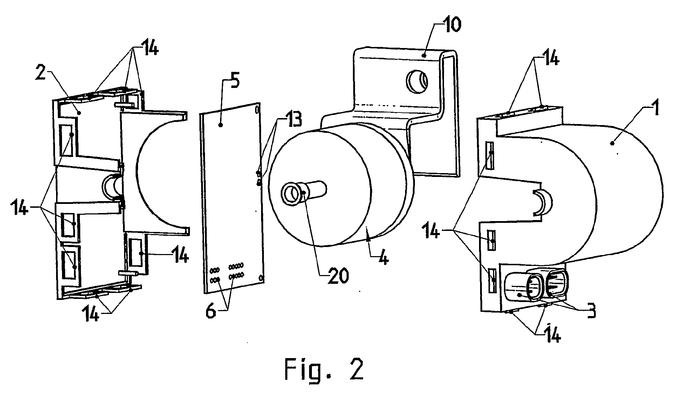

Fig. 2 zeigt eine Explosionszeichnung des Stellantriebs nach Fig. 1. Der Aktor 4 an dem Kühl/Halteblech 10 kann in die Gehäuseschale 1 eingelegt werden. Beim darauffolgenden Einbringen der Leiterplatte 5 in die Gehäuseschale 1 wird vorzugsweise sowohl der Kontakt zwischen der Leiterplatte 5 und der Kontaktiervorrichtung 3 der Gehäuseschale 1 als auch der Kontakt zwischen der Leiterplatte 5 und dem Aktor 4 jeweils bevorzugt über Einpressverbindungen hergestellt. Abschließend kann der Gehäusedeckel 2 mit der Gehäuseschale 1 verrastet werden. An Stelle der Rastverbindung zwischen denn beiden Gehäuseteilen wäre zum Beispiel auch eine Verklebung oder auch eine Verschweißung denkbar.

Die Verbindung zwischen der Gehäuseschale 1 und dem Gehäusedeckel 2 ist derart, dass der Stellantrieb gegen äußere Umwelteinflüsse wie Feuchtigkeit und Schmutz abgedichtet ist. Darüber hinaus ist insbesondere durch das Zusammenfügen der Gehäuseschale 1 und des Gehäusedeckels 2 die Lagervorrichtung 20 des Betätigungsstößels 19 fixiert.

Als Aktor 4 des erfindungsgemäßen Stellantriebs muss nicht notwendigerweise ein Tauchspulensteller Anwendung finden. Denkbar wäre zum Beispiel auch die Verwendung eines Linearmotors. Als elektrische Verbindung von Gehäuse 1, 2 zur Leiterplatte 5 und/oder zum Aktor 4 bzw. Leiterplatte 5 zum Aktor 4 wäre auch eine Schneid-Klemm-Verbindung möglich.

Der erfindungsgemäße Stellantrieb ist einfach zu montieren und umfasst wenige Bauteile. Diese Kompaktheit gewährleistet, dass sowohl Material- und Herstellungskosten, als auch der benötigte Bauraum gering sind.

### Bezugszeichenliste:

- 1: Gehäuseschale
- 2: Gehäusedeckel
- 3: Kontaktiervorrichtung
- 4: Aktor
- 5: Leiterplatte
- 6: Kontaktelement zur Gehäuseschale
- 7: Lagervorrichtung, pedalelementseitig
- 8: Magnetanordnung
- 9: Spulenanordnung
- 10: Kühl-/Halteblech
- 11: Pedalelement
- 12: Pedalhalter
- 13: Kontaktelement zum Aktor
- 14: Rastvorrichtung
- 15: Magnet
- 16: Magnetjoch
- 17: Spule
- 18: Spulenträger
- 19: Betätigungsstößel
- 20: Lagervorrichtung, pedaldiametral

## Patentansprüche

1. Stellantrieb mit
- einem Gehäuse (1, 2) mit wenigstens einer Kontaktiervorrichtung (3)
- einer Leiterplatte (5) zur Aufnahme von elektrischen Bauteilen und wenigstens einem Kontaktelement (6, 13) und
- einem elektromechanischen Aktor (4) mit einem beweglichen Stellglied (8, 9), wobei der Aktor (4) als Linearaktor ausgebildet ist,
**dadurch gekennzeichnet, dass**
der nicht bewegliche Teil des Aktors (4) mit einem Kühl-/ Halteblech (10) verbunden ist, wobei das Kühl-/Halteblech (10) an einem Pedalhalter (12) befestigt ist.

2. Stellantrieb nach Anspruch 1, **dadurch gekennzeichnet, dass** eine Lagervorrichtung (7, 20) des beweglichen Stellgliedes (8, 9) wenigstens zum Teil an einem nicht beweglichen Teil des Aktors (4) vorgesehen ist.

3. Stellantrieb nach einem der Ansprüche 1 oder 2, **dadurch gekennzeichnet, dass** die Lagervorrichtung (7, 20) des beweglichen Stellgliedes (8, 9) wenigstens zum Teil am Gehäuse (1, 2) vorgesehen ist.

4. Stellantrieb nach einem der Ansprüche 1 bis 3 , **dadurch gekennzeichnet, dass** die elektrische Verbindung der Kontaktiervorrichtung (3) des Gehäuses (1) zum Aktor (4) als Einpressverbindung ausgeführt ist.

5. Stellantrieb nach einem der Ansprüche 1 bis 4, **dadurch gekennzeichnet, dass** die elektrische Verbindung der Kontaktiervorrichtung (3) des Gehäuses (1) zum Kontaktelement (6) der Leiterplatte (5) als Einpressverbindung ausgeführt ist.

6. Stellantrieb nach einem der Ansprüche 1 bis 5, **dadurch gekennzeichnet, dass** die elektrische Verbindung eines Kontaktelements (13) der Leiterplatte (5) zum Aktor (4) als Einpressverbindung ausgeführt ist.

7. Stellantrieb nach einem der Ansprüche 1 bis 6, **dadurch gekennzeichnet, dass** das Gehäuse eine Gehäuseschale (1) und einen Gehäusedeckel (2) umfasst.

## Claims

1. Actuating drive with
- a housing (1, 2) with at least one contacting device (3),
- a printed circuit board (5) for accommodating electric components and at least one contact element (6, 13), and
- an electromechanical actuator (4) with a movable modulator (8, 9), wherein the actuator (4) is formed as a linear actuator,
**characterized in that**
the non-movable part of the actuator (4) is connected to a cooling/holding plate (10), wherein the cooling/holding plate (10) is attached to a pedal holder (12).

2. Actuating drive according to Claim 1, **characterized in that** a bearing device (7, 20) of the movable modulator (8, 9) is at least partly provided at a non-movable part of the actuator (4).

3. Actuating drive according to any one of Claims 1 or 2, **characterized in that** the bearing device (7, 20) of the movable modulator (8, 9) is at least partly provided at the housing (1, 2).

4. Actuating drive according to any one of Claims 1 to 3, **characterized in that** the electrical connection between the contacting device (3) of the housing (1) and the actuator (4) is realized as a press-fit connection.

5. Actuating drive according to any one of Claims 1 to 4, **characterized in that** the electrical connection between the contacting device (3) of the housing (1) and the contact element (6) of the printed circuit board (5) is realized as a press-fit connection.

6. Actuating drive according to any one of Claims 1 to 5, **characterized in that** the electrical connection between a contact element (13) of the printed circuit board (5) and the actuator (4) is realized as a press-fit connection.

7. Actuating drive according to any one of Claims 1 to 6, **characterized in that** the housing comprises a housing shell (1) and a housing cover (2).

## Revendications

1. Servomoteur, comprenant
- un boîtier (1, 2) avec au moins un dispositif de mise en contact (3)
- une plaquette de circuit imprimé (5) pour loger des composants électriques et au moins un élément de contact (6, 13) et
- un actionneur (4) électromécanique avec un organe de réglage (8, 9) mobile, l'actionneur (4) étant constitué en tant qu'actionneur linéaire,
**caractérisé en ce que**
la partie non mobile de l'actionneur (4) est raccordée à une tôle de refroidissement/retenue (10), la tôle de refroidissement/retenue (10) étant fixée à un élément de retenue de pédale (12).

2. Servomoteur selon la revendication 1, **caractérisé en ce qu'**un dispositif de support (7, 20) de l'organe de réglage (8, 9) mobile est prévu au moins partiellement sur une partie non mobile de l'actionneur (4).

3. Servomoteur selon une des revendications 1 ou 2, **caractérisé en ce que** le dispositif de support (7, 20) de l'organe de réglage (8, 9) mobile est prévu au moins partiellement sur le boîtier (1, 2).

4. Servomoteur selon une des revendications 1 à 3, **caractérisé en ce que** le raccordement électrique du dispositif de mise en contact (3) du boîtier (1) à l'actionneur (4) est réalisé en tant que raccordement à emmancher.

5. Servomoteur selon une des revendications 1 à 4, **caractérisé en ce que** le raccordement électrique du dispositif de mise en contact (3) du boîtier (1) à l'élément de contact (6) de la plaquette de circuit imprimé (5) est réalisé en tant que raccordement à emmancher.

6. Servomoteur selon une des revendications 1 à 5, **caractérisé en ce que** le raccordement électrique d'un élément de contact (13) de la plaquette de circuit imprimé (5) à l'actionneur (4) est réalisé en tant que raccordement à emmancher.

7. Servomoteur selon une des revendications 1 à 6, **caractérisé en ce que** le boîtier comprend une coque de boîtier (1) et un couvercle de boîtier (2).
